# EUROPEAN PATENT APPLICATION

(11) **EP 2 196 897 A2**
(43) Date of publication of application: **16.06.2010**
(21) Application number: 09176501.6
(22) Date of filing: 19.11.2009
(51) Int. Cl.: G06F 3/12

(54) **Methods and structure for automated devcaps file verification background**

(30) Priority: 11.12.2008 US 332917
(71) Applicant: Ricoh Company, Ltd., Tokyo 143-8555 (JP)
(72) Inventor: Shah, Zarana, Cupertino, CA 95014 (US); Liu, Yue, Cupertino, CA 95014 (US)
(74) Representative: Schwabe - Sandmair - Marx

(57) **Abstract**

Methods and structure for verifying information in a device capabilities (DevCaps) file associated with a printing system. A job ticket generator generates test job tickets based on the DevCaps file and transmits the generated tickets to a job ticket validator. The validator validates that each received ticket can be correctly executed by the printing system. The generator accesses the DevCaps file to determine features configured on the printing system and possible values for each of the specified features. The validator returns a success or failure signal and the results of each test job ticket may be logged. An error status indicates an error in the DevCaps file relative to the present configuration of the printing system. The validator may be operable within the printing system such as a PostScript program executed by the printer controller or may be operable in a computer system coupled with the generator.

## Description

### BACKGROUND

### 1. Field of the Invention

The invention relates generally to printing environments using job tickets such as Job Definition Format (JDF) job tickets and more specifically relates to methods and structure for generating and validating job tickets to verify proper capabilities definition of an associated printing system.

### 2. Discussion of Related Art

In many printing environments, including print shops (large and small), production printing and even smaller workgroup environments, it is generally known to create JDF information describing the processing required to print a particular print job. JDF is a widely adopted standard specification for providing information (printing parameters, layout parameters, finishing parameters, etc.) relating to processing of a print job. The JDF information is typically contained in an object/file referred to as a "job ticket" and is associated with the print data for the print job by entries in the job ticket. A JDF job ticket includes any number of JDF elements required to specify printing parameters associated with the printing of a particular job. Exemplary of such printing parameters are: one or more resource locators identifying content for the material to be printed, rendering parameters indicating options for rendering various types of objects associated with a print job, layout options indicating, for example, n-up, duplex, and other available print options, media parameters for printing (e.g., paper size, weight, color, etc.), etc.

The JDF standards are published by CIP4 (a trade organization), are well known to those of ordinary skill in the art, and are readily available at www.cip4.org. In general, JDF elements are organized as a hierarchical tree such that various parameters are grouped into associated, logical branches of the tree of possible parameters and options. The tree has a common root and branches are associated with certain enumerated groupings of related parameters that may be specified by a user/application in creating a job ticket. Some present-day printing systems include a print server or other control elements that receive a JDF job ticket and process the JDF elements specified therein to directly control aspects of processing of the print job.

In creating a print job and an associated job ticket, application programs and/or driver software modules in a computing system coupled to a printing system often use a device capabilities file structure (a DevCaps file) to determine which features should be available for particular printing system. The application/driver may present available features and options found in the DevCaps file for a selected printer to a user (or may present available features and options to a program through an application program interface - API). A user/program then selects desired features and options for the print job and creates a JDF job ticket to forward to the printing system. The printing system will then interpret the features and options in the job ticket and cause the associated print job to be printed as directed by the user/program through the generated JDF job ticket.

A problem may arise if the capabilities enumerated in the DevCaps file do not match the actual capabilities of the associated printing system or do not match the system capabilities as the printing system is presently configured. For example, if the DevCaps file for a particular printing system indicates features associated with a folding option of the printing system but such an option is not presently available, the DevCaps file does not accurately represent the current features of the associated printing system. Relying on such a presently inaccurate DevCaps file may cause a driver or application program to generate job tickets for jobs that cannot at present be correctly executed by the printing system. Similarly, if the DevCaps file indicates that a duplex printing feature is available but such a feature is not actually installed on the associated printing system or is presently inoperable, then job tickets for print jobs requesting the duplex feature will fail on the actual, associated printing system. When the print job fails to print correctly due to such an erroneous job ticket based on inaccurate DevCaps file information, further manual intervention may be required to correct the problem and to reprint the print job.

Thus it is an ongoing challenge to identify when a DevCaps file does not accurately reflect the capabilities of the associated printing system.

### SUMMARY

The present invention solves the above and other problems, thereby advancing the state of the useful arts, by providing methods and associated structure for automatically generating test job tickets and for automatically validating that each generated job ticket is presently capable of being correctly executed in the printing system. The methods and structures thereby validate that the DevCaps file contains information that accurately reflects the configuration of the associated printing system.

One aspect hereof provides a method operable in one or more computing devices to verify information in a device capabilities (DevCaps) file associated with a printing system. The method includes generating, in a test job ticket generator, a test job ticket based on information in the DevCaps file and transmitting the test job ticket from the test job ticket generator to a job ticket validator. The method then includes simulating, in the job ticket validator, execution of the print job represented by the test job ticker and detecting whether the print job is correctly executed by the job ticket validator. Responsive to detecting that the job ticket was not correctly executed by the job ticket validator, the method then includes outputting an error signal that the printing system cannot correctly execute the test job ticket.

Another aspect hereof provides a system for verifying information in a device capabilities (DevCaps) file associated with a printing environment. The system includes a job ticket generator that generates a test job ticket based on the information in the DevCaps file. The test job ticket indicates a set of features to be used in printing an associated print job on a printing system. The system also includes a job ticket validator coupled with the job ticket generator to receive the test job ticket and adapted to determine whether the printing system can correctly process the received test job ticket and adapted to output an error signal if the printing system cannot correctly process the received test job ticket.

### BRIEF DESCRIPTION OF THE DRAWINGS

The same reference number represents the same element or same type of element on all drawings.
FIG. 1 is a block diagram of an exemplary system embodying features and aspects hereof to generate test job tickets and to validate correct execution of the test job tickets to detect a failure of an associated printing system.
FIG. 2 is a block diagram of another exemplary embodiment of a system embodying features and aspects hereof where the validator is operable within the printing system to be tested.
FIG. 3 is a block diagram of another exemplary embodiment of a system embodying features and aspects hereof where the validator is operable within a computing system coupled with the generator to emulate/simulate execution of the test job tickets.
FIG. 4 is a flowchart describing an exemplary method in accordance with features and aspects hereof to generate test job tickets and to validate correct execution of the test job tickets to detect a failure of an associated printing system.
FIGS. 5 and 6 are flowcharts describing exemplary additional details of steps of the method of FIG. 4.

### DETAILED DESCRIPTION OF THE DRAWINGS

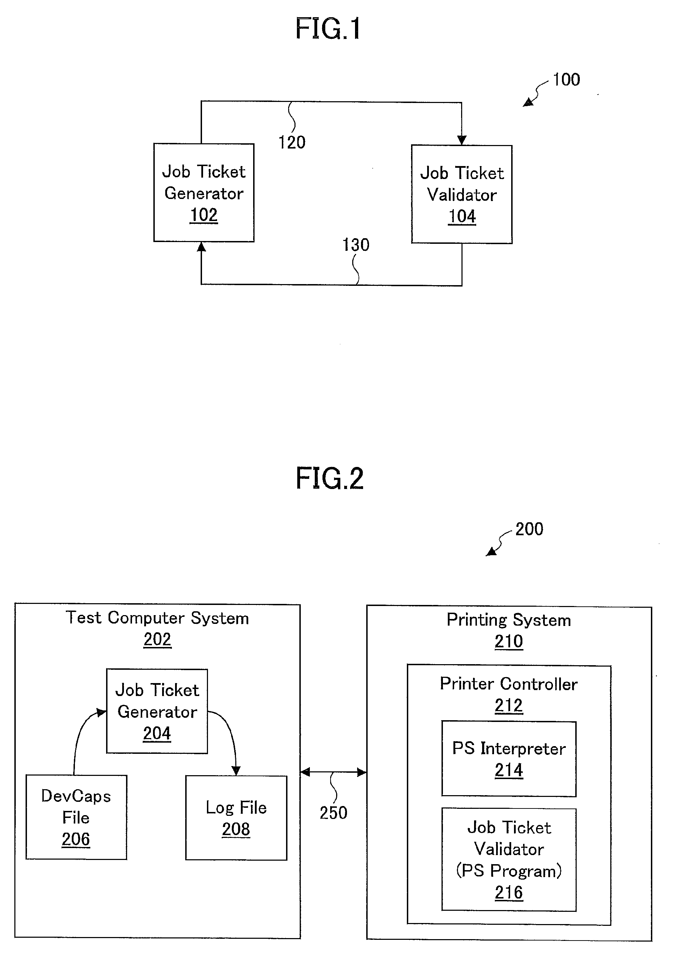

FIGS. 1 through 6 and the following description depict specific exemplary embodiments of the present invention to teach those skilled in the art how to make and use the invention. For the purpose of this teaching, some conventional aspects of the invention have been simplified or omitted. Those skilled in the art will appreciate variations from these embodiments that fall within the scope of the present invention. Those skilled in the art will appreciate that the features described below can be combined in various ways to form multiple variations of the present invention. As a result, the invention is not limited to the specific embodiments described below, but only by the claims and their equivalents.

FIG. 1 is a block diagram of a system 100 adapted to automatically generate test job tickets to verify information in a DevCaps file associated with a printing system. Job ticket generator 102 generates one or more test job tickets and transmits the generated test job tickets via path 120 to job ticket validator 104. Job ticket validator 104 executes or simulates execution of the print job represented by the received test job ticket and detects whether the corresponding print job would correctly execute on an associated printer printing system. Job ticket validator 104 returns status information regarding the execution of each of the one or more test job tickets received. The status information may be returned to the job ticket generator 102 via path 130. Job ticket generator 102 may receive the returned status information and log the information to record success or failure of each test job ticket generated. Such logged success and failure information may be utilized, for example, to detect the presence of incorrect information in the DevCaps file associated with the printing system. As noted above, the information may be incorrect relative to the present configuration of the printing system or relative to a present operating status of the printing system. Still further, such logged information may be utilized, for example, to control the generation of job tickets for actual print jobs so as to avoid generating job tickets from the DevCaps file for actual print jobs that are known not to correctly execute on an identified printer.

Job ticket generator 102 may be operable in a computer system such as a personal computer or workstation. Job ticket validator 104 may be operable in a printing system such as in the printer controller of a printing system coupled with the computer system in which the job ticket generator 102 is operable. In such an embodiment, job ticket validator 104 operable within the printing system executes a received test job ticket but does so without generating printed output so as to reduce consumption of the printable medium (e.g., paper). In effect, job ticket validator 104 serves as an emulation or simulation of the execution of a received test job ticket without actually causing imprinting of generated page images. In an alternative exemplary embodiment, job ticket validator 104 may be operable within a computer system including the same computer system in which to job ticket generator 102 is operable or within a related computing system communicatively coupled with the computing system in which job ticket generator 102 is operable. In such an alternative exemplary embodiment, job ticket validator 104 operates as a simulator/emulator of a particular printing system as presently configured to simulate execution of the test job tickets generated by job ticket generator 102 and received via path 120.

FIG. 2 is a block diagram providing additional exemplary details of a first embodiment of features and aspects hereof. System 200 includes a test computer system 202 in which job ticket generator 204 is operable. Test computer system 202 may be any typical computing system such as a personal computer or workstation including suitable processing capabilities, associated memory, associated mass storage capacity, etc. Job ticket generator 204 may therefore represent suitably programmed instructions operable within the test computer system 202 or may be implemented as suitably designed custom hardware and processing features within test computer system 202.

Job ticket generator 204 accesses information in a device capabilities file (DevCaps file 206). Entries in the DevCaps file 206 identify features and options generally available on an associated printing system 210. In general, each particular printing system 210 will have a corresponding DevCaps file 206 accessible to job ticket generator 204 within test computer system 202. Each feature or option specified in DevCaps file 206 may include an identifier of the particular feature as well as a specification of potentially valid values to be used for the corresponding feature specification. For example, a DevCaps file 206 entry may specify that the options available for a duplex printing feature include: one sided printing, two sided not flipped printing, and two sided flipped printing. Or, for example, a DevCaps file 206 entry may specify particular types of printable media and page sizes capable of being imprinted by the corresponding printing system 210. Formats and standards for specifications of such features and options in a DevCaps file are generally known to those of ordinary skill in the art.

Job ticket generator 204 generates a test job ticket by accessing information in the DevCaps file 206 to generate a job ticket with a select set of feature values. The job ticket so generated may be, for example, a JDF job ticket. The generated job ticket is transmitted via path 250 printing system 210. Communication path 250 may be any suitable communication media and protocol adapted for coupling test computer system 202 with printing system 210. For example, communication path 250 may utilize Ethernet media and protocols, USB media and protocols, and various other serial and/or parallel communication media and protocols adapted for coupling printing systems to a computer system.

Results of the execution/simulation of the test job ticket generated by job ticket generator 204 in transmitted to print system 210 via path 250 may also be returned via path 250 from printing system 210. Test computer system 202 may receive such status results from printing system 210 and record the results in a log file 208.

Printing system 210 may include a printer controller 212 (i.e., a computing device within the printing system). Printer controller 212 receives one or more test job tickets generated by job ticket generator 204 via path 250. Printer controller 212 then executes or simulates execution of each received test job ticket to determine whether printing system 210, as presently configured and operable, is capable of correctly processing each received test job ticket. A status indicator indicative of successor failure in the execution (or simulated execution) of each received test job ticket is returned to the test computer system for recording in its log file.

In one exemplary embodiment, printing system 210 includes a PostScript interpreter 214 operable to receive and execute PostScript programmed instructions from the test computer system 202. In particular, the job ticket validator may be implemented as a PostScript program 216 interpreted by the PostScript interpreter 214 to receive and process each of the test job tickets generated by job ticket generator 204 and received via path 250. Where the job ticket validator 216 is a PostScript program, test computer system 202 (e.g., job ticket generator 204) may initiate the testing sequence by downloading the desired job ticket validator program 216 into the printer controller 212 of printing system 210.

As noted above, it may be beneficial for job ticket validator 216 operable in printing system 210 to execute received test job tickets by simulating execution of the print job defined by each test job ticket rather than physically causing imprinting of an associated print job. In other words, the received test job ticket defining a print job may be executed completely except for actually imprinting any printable medium. By avoiding printing for each of the received test job tickets, substantial printable medium (e.g., paper) may be saved since the printed output is not required to determine whether the printing system 210 can correctly execute a received test job ticket.

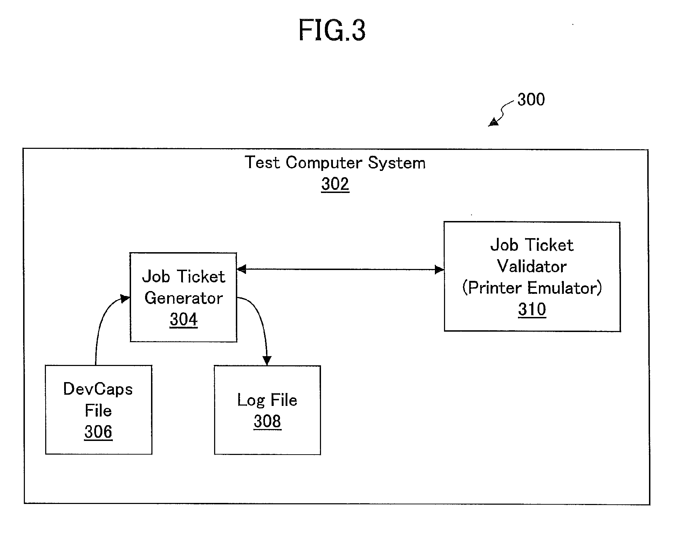

FIG. 3 is a block diagram describing another exemplary embodiment of features and aspects hereof wherein the job ticket generator 304 and the job ticket validator 310 are both programs operable within a test computer system 302. It will be noted by those of ordinary skill in the art that the two programs may operate on the same physical computing system or may be implemented as cooperative programs operable on distinct computing systems coupled through a suitable network. Such design choices are well known to those of ordinary skill in the art.

The exemplary embodiment of system 300 of FIG. 3 differs from system 200 of FIG. 2 in that the job ticket validator 310 is a program operable in a computing system as distinct from a program operable within the printing system per se. Thus, job ticket validator 310 serves as an emulator or simulator to simulate the operation of a corresponding specific printing system.

Similar to the operation of system 200 of FIG. 2, job ticket generator 304 accesses information in a DevCaps file 306 to generate one or more test job tickets. Each generated test job ticket specifies a corresponding selected set of values for one or more of the features identified in the DevCaps file 306 corresponding to the particular printing system being emulated by job ticket validator 310. Each generated test job ticket is then forwarded from the job ticket generator 304 to the job ticket validator 310 for simulated execution. Results of the simulated execution are returned from the job ticket validator 310 to the job ticket generator 304 and may then be logged in a log file 308.

The log file generated by the job ticket generator of systems 200 and 300 of FIGS. 2 and 3 therefore includes a complete log of each test job ticket forwarded to the job ticket validator and the results of the execution/simulation of each test job ticket. At a minimum, the log file should contain at least an entry for each test job ticket that failed the execution by job ticket validator operation. The log of such failed test job tickets may be utilized to identify a problem in the DevCaps file where certain features specified therein are not presently capable of correct execution by the associated printing system. The log file may thus be used to avoid generating print job tickets for actual print jobs that cannot at present be correctly executed by the associate printing system.

Those of ordinary skill in the art will readily recognize numerous additional and equivalent elements in a fully functional system such as generally described in FIGS. 1, 2, and 3. Such additional and equivalent elements are omitted herein for simplicity and brevity of this discussion.

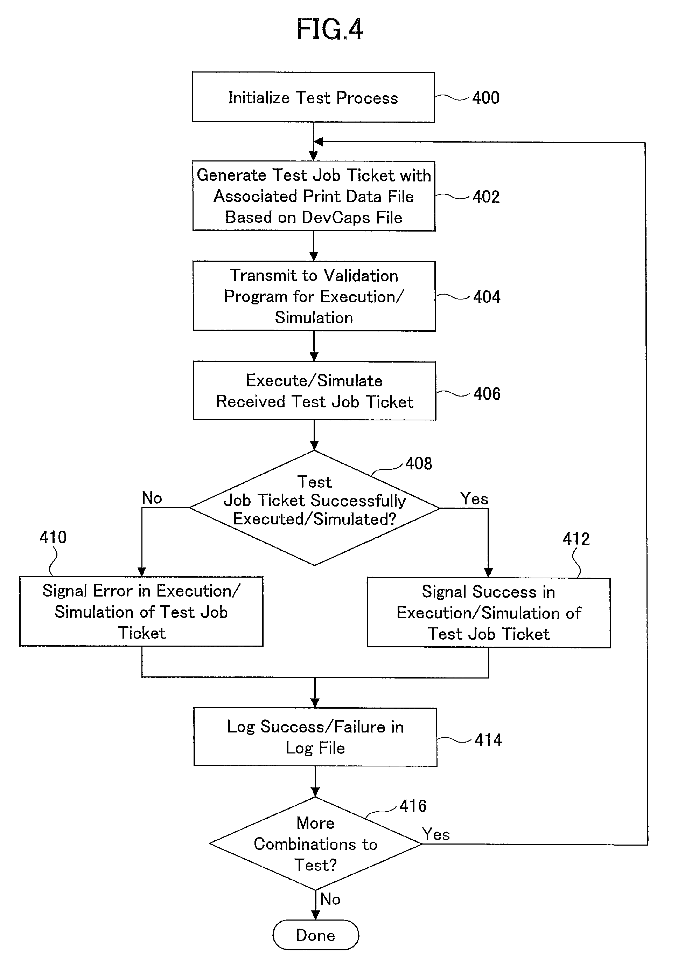

FIG. 4 is a flowchart describing an exemplary method in accordance with features and aspects hereof to generate test job tickets and execute or simulate the execution of the generated test job tickets to verify correct operation of an associated printing system for job tickets generated based on information in the DevCaps file for the printing system. Step 400 initializes the test process. As will be discussed further herein below, initialization may include determining a number of test job tickets to be generated and a specific manner in which the test job tickets should be generated to test a variety of feature values specified by the generated test job tickets. Step 402 then generates a next test job ticket (along with any associated print data file required to execute the test job ticket) based on information in the DevCaps file. As discussed further herein below, step 402 generates the test job ticket by selecting desired feature values from the list of features and associated values in a DevCaps filed associated with the printing system to be tested. The selected set of features values are then translated into it properly formatted JDF job ticket.

Step 404 then transmits the generated test job ticket to the job ticket validator for execution or simulation of execution. As noted above, where the test job ticket is forwarded to a job ticket validator operable within the printing system to be tested, the job ticket may be actually executed but for the imprinting of page images generated by the associated press job. Conversely, where the job ticket validator is operable within a computing system separate and distinct from the printing system, the job ticket validator may emulate or simulate execution of the received test job ticket by the corresponding printing system. Such emulation or simulation may account for presently known status of the corresponding printing system and its current configuration.

Step 406 then executes or simulates execution of the received test job ticket within the job ticket validator. Step 408 next detects whether the execution or simulation of the test job ticket was successful or failed due to, for example, some different or altered configuration of the corresponding printing system relative to the information in the DevCaps file. If the executed or simulated test job ticket failed, step 410 generates an error signal indicating an error in the execution of a particular, identified test job ticket. Otherwise, step 412 may signal successful completion of the execution or simulation of an identified test job ticket. In both cases, step 414 logs the success or failure of the execution/simulation of the identified test job ticket in a log file associated with the test job ticket generator. Step 416 and determines whether additional combinations of feature values from the DevCaps file remain to be tested as corresponding, generated test job tickets. If so, processing loops back to step 402 to repeat the process of steps 402 through 414 until all desired combinations of feature values have been so tested.

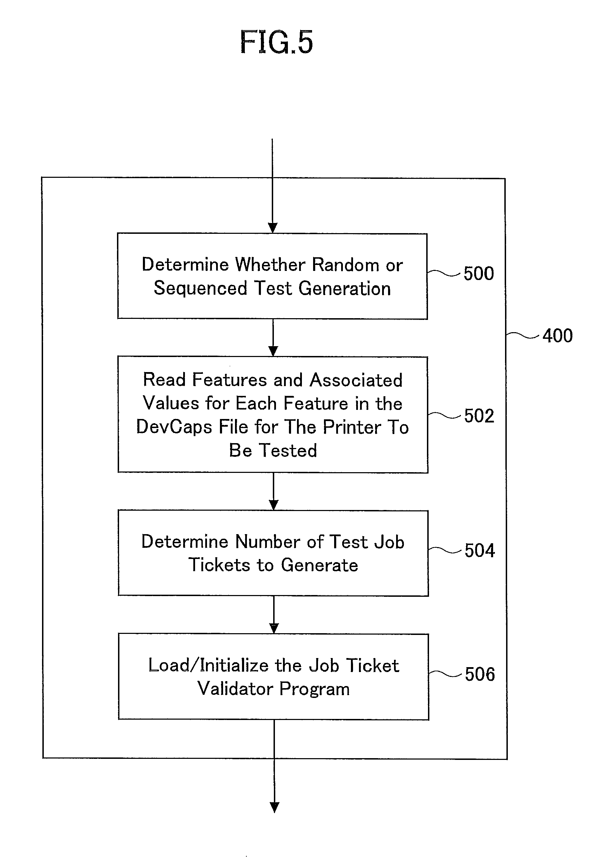

FIG. 5 is a flowchart providing exemplary additional details of the processing of step 400 of FIG. 4. As noted above, step 400 of FIG. 4 initializes test processing to generate one or more test job tickets to be forwarded to a job ticket validator. Step 500 first determines whether the administrative user requesting the commencement of test job ticket generation has requested that the job tickets to be generated shall be randomly generated or generated in a sequenced order. As discussed further herein below, random generation of test job tickets will select random sets of feature values from the DevCaps file in generating each test job ticket. By contrast, sequenced test job ticket generation will generate test job tickets by selecting feature values from the DevCaps file for the printing system in a sequenced order. In addition, an administrative user may also indicate the number of test job tickets to be generated. In the alternative, the number of test job tickets to be generated for a sequenced order of test job ticket generation may be determined by identifying the maximum number of option values available for any particular feature identified in the DevCaps file. Still further, the number of test job tickets to be generated may be determined as the number of test job tickets required to exhaustively create each possible combination of selected feature values from the DevCaps file. Such an exhaustive approach may be impractical where the number of features and the number of option values for each feature are large.

Step 502 then reads the features and associated values for each feature in the DevCaps file for the printing system to be tested. Step 504 then determines the number of test job tickets to be generated based on the user's request to initiate a random test of job ticket generation or a sequenced order of generation of test job tickets. Step 506 may optionally load or initialize the test job ticket validator program to prepare it for receipt of generated test job tickets and execution or simulated execution of same. For example, where the job ticket validator program is a PostScript program to be executed within the printer controller of the PostScript printing system, the PostScript program may be downloaded from the job ticket generator computing system into the PostScript program memory of the printing system. Regardless of where the job ticket validator is designed to operate, step 506 essentially represents all necessary processing to load and/or initialize the job ticket validator program and to establish required communications between the job ticket validator and the job ticket generator.

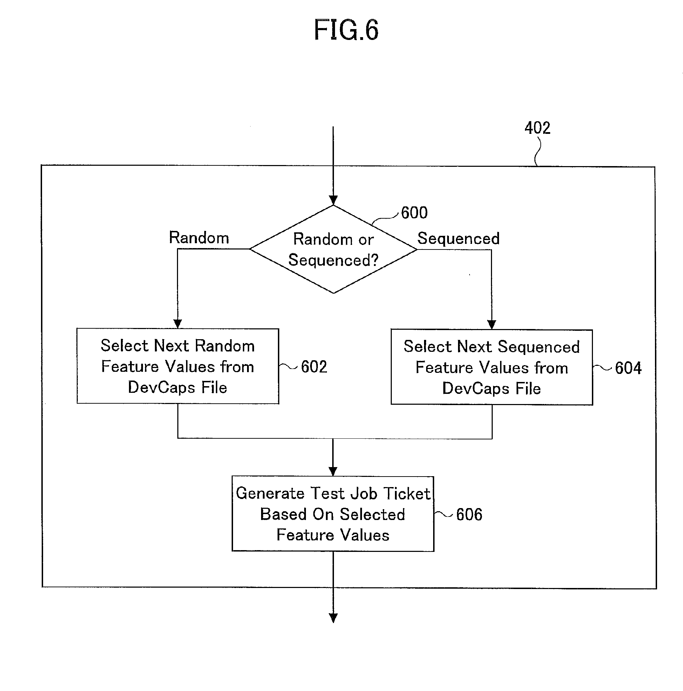

FIG. 6 is a flowchart providing exemplary additional details of the operation step 402 of FIG. 4. Step 402 of FIG. 4 represents processing to generate a test job ticket in accordance with corresponding selected feature values identified in the DevCaps file for a particular printing system. Step 600 of FIG. 6 first determines whether the user has requested random test job ticket generation or generation of test job tickets in a sequenced order. If the user requested random job ticket generation, step 602 selects another random set of feature values for one or more features identified in the DevCaps file for the corresponding printing system. Otherwise, step 604 selects a next set of feature values in a sequenced order from the DevCaps file for corresponding printer. In both cases, step 606 next generates a JDF test job ticket based on the selected feature values from either step 602 were step 604.

In random selection of feature values, the job ticket generator may generate each test job ticket by randomly selecting a set of features to be specified by the test job ticket and then also randomly selecting the feature value for each randomly selected feature to be specified in the test job ticket. An administrative user may specify the number of test job tickets to be so randomly generated and may specify a random number seed value to permit reproduction of a particular sequence of test job tickets. Where the user requests that the test job tickets be generated in an ordered sequence, the job ticket generator may first determine the number of test job tickets to be generated. The number to be generated may be determined by, for example, determining which feature specified in the DevCaps files for the printing system has the largest number of possible values that may be associated with the feature. The number of test job tickets generated may then be determined as the number of tickets required to use every value associated with the identified feature in the DevCaps file having the largest number of possible values. Or, for example, the number of test job tickets to be generated may be determined as the combined product of all possible values of all available features in the DevCaps file for the printing system. In this latter case, such a set of test job tickets would exhaustively test all possible combinations of features and values for each feature in a sequence of generated test job tickets. Depending on the number of features specified in the DevCaps file for the printing system and the number of possible values associated with each feature, the number of such test job tickets for a truly exhaustive test could be impractically large. The cost in time required to generate and execute every possible test job ticket could be far more than the benefit realized by such an exhaustive test. Still further, those of ordinary skill in the art will readily recognize numerous other techniques to select an ordered sequence of features and values for those selected features to generate a number of test job tickets. Any of several well known heuristic approaches may be employed to select most likely or most common sets of selected features for test job ticket generation.

Those of ordinary skill in the art will readily recognize numerous additional and equivalent steps in implementations of the methods of FIGS. 4 through 6. Such additional and equivalent steps are omitted herein for simplicity and brevity of this discussion.

Although specific embodiments were described herein, the scope of the invention is not limited to those specific embodiments. The scope of the invention is defined by the following claims and any equivalents thereof.

## Claims

1. A method operable in one or more computing devices to verify information in a device capabilities (DevCaps) file associated with a printing system, the method comprising:
generating, in a test job ticket generator, a test job ticket based on information in the DevCaps file;
transmitting the test job ticket from the test job ticket generator to a job ticket validator; simulating, in the job ticket validator, execution of the print job represented by the test job ticker;
detecting whether the print job is correctly executed by the job ticket validator; and
responsive to detecting that the job ticket was not correctly executed by the job ticket validator, outputting an error signal that the printing system cannot correctly execute the test job ticket.

2. A system for verifying information in a device capabilities (DevCaps) file associated with a printing environment, the system comprising:
a job ticket generator that generates a test job ticket based on the information in the DevCaps file wherein the test job ticket indicates a set of features to be used in printing an associated print job on a printing system; and
a job ticket validator coupled with the job ticket generator to receive the test job ticket, the job ticket validator adapted to determine whether the printing system can correctly process the received test job ticket and adapted to output an error signal if the printing system cannot correctly process the received test job ticket.

3. The system of claim 2
wherein the job ticket validator is operable in a printing system coupled with the job ticket generator,
wherein the job ticket validator is operable to execute the received test job ticket to determine whether the printing system can correctly process the received test job ticket, and
wherein the job ticket validator executes the received test job ticket without generating printed output from execution of the received test job ticket.

4. The system of claim 3
wherein the printing system is a PostScript capable printing system, and
wherein the job ticket validator is a PostScript program interpreted within the printing system.

5. The system of claim 4
wherein the job ticket generator is operable to load the job ticket validator PostScript program into the printing system.

6. The system of claim 2
wherein the job ticket generator is operable to access the DevCaps file to select values from the possible values of the feature and operable to generate the test job ticket based on the selected values.

7. The system of claim 6
wherein the DevCaps file includes a plurality of features associated with the printing system, each feature having one or more possible values,
wherein the job ticket generator is operable to generate a plurality of test job tickets and operable to transmit the plurality of test job tickets to the job ticket validator, and
wherein each of the plurality of test job tickets is generated based on a set of values for one or more features unique with respect to all other generated test job tickets.

8. The system of claim 7
wherein the job ticket generator is operable to randomly select the set of values used for each generated job ticket.

9. The system of claim 7
wherein the job ticket generator is operable to select the set of values used for each generated job ticket in an ordered sequence.

10. The system of claim 7 further comprising:
a log file coupled with the job ticket validator where the log file includes an entry for each test job ticket that did not correctly execute.

11. A method operable in computing devices associated with a printing environment, the method comprising:
generating a plurality of test job tickets in a computing system coupled to a printing system, each test generated based on a corresponding selected set of values associated with each of multiple features identified in a device capabilities (DevCaps) file associated with the printing system;
transmitting the plurality of test job tickets to a printing system;
executing each of the plurality of test job tickets in a computing device within the printing system;
determining within the printing system whether each of the plurality of test job tickets can correctly execute on the printing system; and
generating an error signal in response to a determination that at least one of the plurality of test job tickets cannot correctly execute on the printing system.
